# EUROPEAN PATENT APPLICATION

(11) **EP 2 742 835 A1**
(43) Date of publication of application: **18.06.2014**
(21) Application number: 12822121.5
(22) Date of filing: 08.08.2012
(51) Int. Cl.: A47J 41/02, F16L 59/06

(54) **AIRTIGHT CONTAINER, METHOD FOR PRODUCING SAME AND VACUUM INSULATION BODY**

(30) Priority: 09.08.2011 JP 2011173514; 05.09.2011 JP 2011192662; 05.09.2011 JP 2011192685
(71) Applicant: Panasonic Corporation, Kadoma-shi, Osaka 571-8501 (JP)
(72) Inventor: KOSHIYAMA, Masahiro, Osaka 540-6207 (JP); YUASA, Akiko, Osaka 540-6207 (JP); KOJIMA, Shinya, Osaka 540-6207 (JP); TAKANO, Takashi, Osaka 540-6207 (JP); KAWANISHI, Kazuhiro, Osaka 540-6207 (JP); YAMAMOTO, Naoki, Osaka 540-6207 (JP); HASHIDA, Masamichi, Osaka 540-6207 (JP)
(74) Representative: Eisenführ Speiser
(86) International application number: PCT/JP2012/005044
(87) International publication number: WO 2013/021639

(57) **Abstract**

A sealed container (1) includes: a metal container (3) including an opening portion (5) and a first internal space that is reduced in pressure; a solid matter (4) contained in the first internal space of the metal container; and a sealing member (2) made of glass containing at least alkali earth metal oxide or alkali metal oxide, and the sealing member is melted by heating and solidified by cooling to be joined to and seal the opening portion of the metal container.

## Description

### Technical Field

The present invention relates to a sealed container, a method of manufacturing the sealed container, and a vacuum heat insulating body, and particularly to a sealed container configured such that an opening portion of a metal container having an internal space in which pressure is reduced and a solid matter is contained is sealed by a sealing member, a method of manufacturing the sealed container, and a vacuum heat insulating body including a hollow outer coat member having an internal space in which pressure is reduced and the sealed container is contained.

### Background Art

In recent years, as a countermeasure against global warming that is one global environmental problem, moves to promote energy saving are increasing. Therefore, regarding a heat and cold utilizing device, in order to effectively utilizing heat and cold, a vacuum heat insulating body having an excellent heat insulation performance is desired.

For example, the vacuum heat insulating body is configured such that: a core member, such as glass wool, is contained in an internal space of a laminated bag; the pressure of the internal space of the bag is reduced; and the bag is sealed. The core member is high in gas-phase volume ratio, and therefore, a large number of fine voids are formed in the internal space of the bag. In a case where a void diameter of the core member is smaller than a mean free path of a gas molecule under reduced pressure, the size of a thermally-conductive gas molecule (thermally-conductive gas component) becomes small. Especially, in a case where the void diameter of the core member is extremely small, such as about 1 mm, thermal conduction by the gas molecules in a convection flow becomes negligibly small. Further, a ratio of contribution of radiant heat by radiation substances to heat conductivity in the vicinity of room temperature is extremely low. Therefore, the thermal conduction in the vacuum heat insulating body is dominated by thermally-conductive solid components of the core member and the slightly remaining thermally-conductive gas components. On this account, the heat conductivity of the vacuum heat insulating body is considered to be extremely lower than those of the other heat insulating materials.

For such a high-performance vacuum heat insulating body, even a small amount of air flowing into the internal space through the laminated bag becomes an important factor that deteriorates a heat insulation property of the vacuum heat insulating body. Here, proposed is that a gas adsorption device is further contained in the internal space of the bag in addition to the core member. With this, since the gas adsorption device adsorbs a minute amount of thermally-conductive gas components having intruded into the internal space, the heat insulation performance of the vacuum heat insulating body is maintained. Therefore, the gas adsorption device is required to have an extremely high gas adsorption performance. Especially, proposed is a method of maintaining the performance of the gas adsorption device by opening a sealing member of the gas adsorption device in the internal space of the vacuum heat insulating body.

As with the above gas adsorption device, proposed is a technology of seal glass for sealing a container in a vacuum state.

Regarding a metal vacuum double container in PTL 1, the double container is configured by joining metal inner and outer containers, one of which includes an exhaust port. A sealant made of low-temperature molten glass having a softening temperature of 200 to 600°C is provided in the vicinity of the exhaust port. Then, a double container is provided in a vacuum heating furnace, and an exhaust operation is performed such that a void between the inner and outer containers of the double container becomes a vacuum state at a temperature lower than the softening temperature of the sealant. Next, when the double container is heated to a temperature higher than the softening temperature of the sealant, the sealant softens to seal the exhaust port.

Regarding the metal double container in PTL 2, proposed is a composition of seal glass for sealing an exhaust port of the double container that is in a vacuum state.

Further, regarding the metal double container in PTL 3, proposed as seal glass for sealing an exhaust port of the double container that is in a vacuum state is seal glass in which the amount of gas generated therefrom when sealing the exhaust port is small.

### Citation List

### Patent Literature

PTL 1: Japanese Laid-Open Patent Application Publication No. 6-169850
PTL 2: Japanese Laid-Open Patent Application Publication No. 2002-125866
PTL 3: Japanese Laid-Open Patent Application Publication No. 2005-319150

### Summary of Invention

### Technical Problem

The metal double container in each of PTLs 1 to 3 is used as, for example, a thermos. Therefore, providing a solid matter in a vacuum space between two containers is not assumed. On this account, a force of joining the seal glass to the exhaust port may be smaller than that in a case where the solid matter is provided in the vacuum space. Therefore, if the solid matter is provided in the vacuum space, a gas and water contained in the solid matter are desorbed in a vacuum seal process. The pressure in the vacuum space increases by these desorbed substances, and the gas in the vacuum space flows through a periphery of the seal glass to be discharged. With this, a force of vacuum seal of the seal glass decreases, and the degree of vacuum of the vacuum space decreases.

The present invention was made to solve the above problems, and an object of the present invention is to provide a sealed container configured such that the decrease in the degree of vacuum in the internal space containing the solid matter is suppressed, a method of manufacturing the sealed container, and a vacuum heat insulating body using the sealed container.

### Solution to Problem

A sealed container according to one aspect of the present invention includes: a metal container including an opening portion and a first internal space that is reduced in pressure; a solid matter contained in the first internal space of the metal container; and a sealing member made of glass containing at least alkali earth metal oxide or alkali metal oxide, wherein the sealing member is melted by heating and then solidified by cooling to be joined to and seal the opening portion of the metal container.

### Advantageous Effects of Invention

The present invention has an effect of being able to provide a sealed container configured such that the decrease in the degree of vacuum in the internal space containing the solid matter is suppressed, a method of manufacturing the sealed container, and a vacuum heat insulating body using the sealed container.

The above object, other objects, features and advantages of the present invention will be made clear by the following detailed explanation of preferred embodiments with reference to the attached drawings.

### Brief Description of Drawings

[Fig. 1] Fig. 1 is a perspective view showing a sealed container according to Embodiment 1 of the present invention.
[Fig. 2] Fig. 2 is a perspective view showing a state where a solid matter is contained in a metal container used in the sealed container shown in Fig. 1.
[Fig. 3] Fig. 3 is a perspective view showing a state where the metal container shown in Fig. 2 is crushed in a substantially flat shape.
[Fig. 4] Fig. 4 is a perspective view showing a state where a sealing member is inserted into an opening portion of the metal container shown in Fig. 3.
[Fig. 5] Fig. 5 is a perspective view showing the sealed container according to Modification Example 1 of Embodiment 1 of the present invention.
[Fig. 6] Fig. 6 is a perspective view showing the sealed container according to Modification Example 2 of Embodiment 1 of the present invention.
[Fig. 7] Fig. 7 is a cross-sectional view showing a vacuum heat insulating body according to Embodiment 2 of the present invention.
[Fig. 8] Fig. 8 is a perspective view showing a gas adsorption device contained in the vacuum heat insulating body shown in Fig. 7.
[Fig. 9] Fig. 9 is a perspective view showing a state where the gas adsorption device shown in Fig. 8 is bent.
[Fig. 10] Fig. 10 is a cross-sectional view showing the vacuum heat insulating body according to Modification Example 3 of Embodiment 2 of the present invention.
[Fig. 11] Fig. 11 is a cross-sectional view showing the vacuum heat insulating body according to Modification Example 3 of Embodiment 2 of the present invention.
[Fig. 12] Fig. 12 is a cross-sectional view showing the vacuum heat insulating body according to Embodiment 3 of the present invention.
[Fig. 13] Fig. 13 is a cross-sectional view showing the vacuum heat insulating body according to Modification Example 9 of Embodiment 3 of the present invention.

### Description of Embodiments

A sealed container according to a first aspect of the present invention includes: a metal container including an opening portion and a first internal space that is reduced in pressure; a solid matter contained in the first internal space of the metal container; and a sealing member made of glass containing at least alkali earth metal oxide or alkali metal oxide, wherein the sealing member is melted by heating and then solidified by cooling to be joined to and seal the opening portion of the metal container.

According to this configuration, by the heat treatment, the alkali earth metal oxide or alkali metal oxide contained in the glass of the sealing member chemically binds to the metal oxide formed on the surface of the opening portion of the metal container. With this, the sealing member and the opening portion are strongly joined to each other. Therefore, even if the solid matter is contained in the metal container, the sealing performance of the sealed container is maintained high.

The sealed container according to a second aspect of the present invention may be configured such that in the first aspect of the present invention, the alkali earth metal oxide of the sealing member is BaO or SrO.

According to this configuration, since each of BaO and SrO among the alkali earth metals strongly, chemically binds to the metal oxide, the sealing member is strongly joined to the opening portion of the metal container. With this, the sealed container can maintain the excellent sealing performance.

The metal container according to a third aspect of the present invention may be configured such that in the first or second aspect of the present invention, the sealing member is located inside the opening portion and joined to the opening portion, and the metal container has a higher thermal expansion coefficient than the sealing member.

According to this configuration, the expanded metal container contracts more than the sealing member by the cooling treatment performed after the heat treatment. Therefore, the opening portion of the metal container tightens the sealing member located inside the opening portion. With this, the opening portion and the sealing member are strongly, mechanically joined to each other. Thus, the sealed container can maintain the excellent sealing performance.

The sealed container according to a fourth aspect of the present invention may be configured such that in any one of the first to third aspects of the present invention, the metal container is made of aluminum.

According to this configuration, the metal container made of aluminum has a higher thermal expansion coefficient than the sealing member. Therefore, the sealing member is more strongly, mechanically joined to the opening portion of the metal container. Thus, the sealed container can maintain the excellent sealing performance.

The sealed container according to a fifth aspect of the present invention may be configured such that in any one of the first to fourth aspects of the present invention, a narrow portion is formed at the opening portion of the metal container, and the sealing member is joined to and seal the narrow portion.

According to this configuration, when the metal container having the opening portion in which the sealing member is located is subjected to the heat treatment, the melted sealing member is held at the narrow portion by the surface tension. Therefore, a mechanism for supporting the melted sealing member is unnecessary, and the sealing member can seal the narrow portion by a simple structure.

The sealed container according to a sixth aspect of the present invention may be configured such that in any one of the first to fifth aspects of the present invention, the solid matter contains a gas adsorbing material that does not deteriorate by a heat treatment, and the sealed container serves as a gas adsorption device.

According to this configuration, even if the solid matter is subjected to the heat treatment for sealing the opening portion of the metal container by the sealing member, the solid matter does not deteriorate. Therefore, the solid matter can fulfill its function as the gas adsorbing material in the sealed container.

The vacuum heat insulating body according to a seventh aspect of the present invention may include: the gas adsorption device constituted by the sealed container according to the sixth aspect of the present invention; a core member; and a hollow outer coat member including a second internal space in which the gas adsorption device and the core member are contained and which is reduced in pressure and sealed.

According to this configuration, since the gas adsorption device is sealed, the gas adsorbing performance is maintained high. When the gas adsorption device is open in the outer coat member, the thermally-conductive gas components remaining in or intruding into the second internal space are adsorbed by the gas adsorption device. Thus, the degree of vacuum of the second internal space is maintained high. With this, the vacuum heat insulating body can fulfill the excellent heat insulation property.

The vacuum heat insulating body according to an eighth aspect of the present invention may be configured such that in the seventh aspect of the present invention, a through hole through which the gas adsorption device is open is formed by destroying the sealing member in the second internal space of the outer coat member.

According to this configuration, it is unnecessary to additionally provide a mechanism for forming a through hole at the sealing member. Thus, the gas adsorption device is surely open by a simple structure.

The vacuum heat insulating body according to a ninth aspect of the present invention may be configured such that in the eighth aspect of the present invention, the opening portion of the metal container is formed in a tubular shape having a substantially flat cross section, and the through hole is formed by applying an external force, acting in a direction along a short axis of the substantially flat cross section of the opening portion, to the sealing member to destroy the sealing member.

According to this configuration, the external force acting in the direction along the short axis of the substantially flat cross section is applied to the opening portion formed in the tubular shape having the substantially flat cross section. With this, since the opening portion deforms easily, the sealing member is easily destroyed. As a result, the gas adsorption device is surely open by a simple structure.

The vacuum heat insulating body according to a tenth aspect of the present invention may be configured such that in any one of the seventh to ninth aspects of the present invention, the gas adsorption device is contained in the core member, and the core member is interposed between the outer coat member and the gas adsorption device.

According to this configuration, when the sealing member is destroyed by the external force, and therefore, the gas adsorption device is open, the external force is absorbed by the core member existing between the outer coat member and the gas adsorption device. With this, broken pieces of the destroyed sealing member do not scatter at the core member. Therefore, when disassembling the vacuum heat insulating body, respective members can be easily separated. Thus, the vacuum heat insulating body can be easily recycled.

The vacuum heat insulating body according to an eleventh aspect of the present invention may be configured to further include, in the tenth aspect of the present invention, a cut formed on the core member and communicating with a space in which the gas adsorption device is contained in the core member.

According to this configuration, by inserting the gas adsorption device through the cut of the core member into the internal space of the core member, the gas adsorption device can be easily contained in the internal space of the core member.

The vacuum heat insulating body according to a twelfth aspect of the present invention may be configured to further include, in any one of the seventh to eleventh aspects of the present invention, a mark put on a portion of the outer coat member, the portion corresponding to a portion where the gas adsorption device is provided.

According to this configuration, when the external force is applied to the position of the gas adsorption device based on the mark, the external force acts on the gas adsorption device. Therefore, the sealing member of the gas adsorption device is destroyed, and therefore, the gas adsorption device is surely open.

The vacuum heat insulating body according to a thirteenth aspect of the present invention may be configured to further include, in any one of the seventh to twelfth aspects of the present invention, a movement suppressing portion provided in the second internal space of the outer coat member and configured to suppress a movement of the gas adsorption device.

According to this configuration, the movement of the gas adsorption device is suppressed by the movement suppressing portion provided in the second internal space of the outer coat member. Therefore, the position of the gas adsorption device can be specified from the outside of the outer coat member. Thus, the decrease in productivity is prevented.

The vacuum heat insulating body according to a fourteenth aspect of the present invention may be configured such that in the thirteenth aspect of the present invention, the movement suppressing portion is constituted by an inner bag configured to contain a part of the gas adsorption device or the entire gas adsorption device.

According to this configuration, the displacement of the gas adsorption device is suppressed by the friction between the gas adsorption device and the inner bag in a range where the gas adsorption device is covered with the inner bag. Thus, the decrease in productivity is prevented.

The vacuum heat insulating body according to a fifteenth aspect of the present invention may be configured such that in the fourteenth aspect of the present invention, the inner bag is made of an elastic material.

According to this configuration, since the gas adsorption device is covered with the inner bag made of the elastic material, the formation of scratches, depressions, and the like on the gas adsorption device is prevented by the inner bag.

The vacuum heat insulating body according to a sixteenth aspect of the present invention may be configured such that in the fifteenth aspect of the present invention, the elastic material includes nonwoven fabric made of resin.

According to this configuration, the nonwoven fabric made of resin absorbs less water and is less likely to tear. Therefore, the decrease in the degree of vacuum of the second internal space is prevented, and the movement of the gas adsorption device is restricted.

The vacuum heat insulating body according to a seventeenth aspect of the present invention may be configured such that in the sixteenth aspect of the present invention, the resin forming the nonwoven fabric contains at least PP or PET.

According to this configuration, each of PP and PET is high in pull strength, tear strength, and heat resistance and low in cost. Therefore, a movement restricting function is maintained, and the decrease in productivity is prevented.

The vacuum heat insulating body according to an eighteenth aspect of the present invention may be configured such that in any one of the thirteenth to seventeenth aspects of the present invention, the movement suppressing portion is constituted by an inner surface of the space in which the gas adsorption device is contained in the core member.

According to this configuration, in the storage space of the gas adsorption device in the core member, the movement of the gas adsorption device is restricted by the friction between the gas adsorption device and the core member that is the inner surface of the space. Therefore, the decrease in productivity is prevented.

A method of manufacturing a sealed container according to a nineteenth aspect of the present invention includes: containing a solid matter in a first internal space of a metal container; and sealing an opening portion of the metal container by a sealing member, made of glass containing at least alkali earth metal oxide or alkali metal oxide, in such a manner that while reducing pressure of the first internal space of the metal container, the sealing member is melted by heating and solidified by cooling to be joined to the opening portion of the metal container.

According to this configuration, by the heat treatment, the alkali earth metal oxide or alkali metal oxide contained in the glass of the sealing member chemically binds to the metal oxide formed on the surface of the opening portion of the metal container. With this, the sealing member and the opening portion are strongly joined to each other. Therefore, even if the solid matter is contained in the metal container, the sealing performance of the sealed container is maintained high.

Hereinafter, embodiments of the present invention will be specifically explained in reference to the drawings.

In the drawings, the same reference signs are used for the same or corresponding components, and a repetition of the same explanation is avoided.

### Embodiment 1

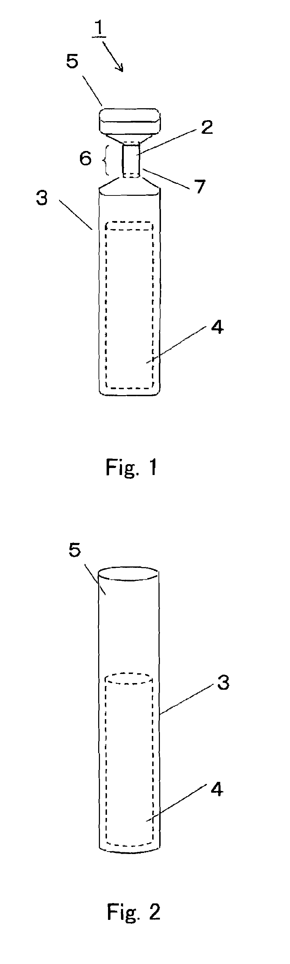

Fig. 1 is a cross-sectional view showing a sealed container 1 in Embodiment 1 of the present invention. The sealed container 1 includes a metal container 3, a solid matter 4, and a glass sealing member 2 containing at least alkali earth metal oxide or alkali metal oxide.

The metal container 3 is a member configured to form an internal space (hereinafter referred to as a "first internal space") that is reduced in pressure. The metal container 3 is made of a metal which does not transmit water, gases, and the like, is high in heat resistance, and is higher in thermal expansion coefficient than the sealing member 2. In light of cost and availability, used as the metal of the metal container 3 is aluminum, iron, copper, stainless steel, or the like. However, the metal of the metal container 3 is not limited to these and is suitably selected depending on the purpose of use of the sealed container 1 and a melting temperature of the sealing member 2. Especially, aluminum is preferable as a material of the metal container 3 since aluminum has a high thermal expansion coefficient among the metals and is higher in ductility than the other metals.

The metal container 3 is formed in a tubular shape having one end (hereinafter referred to as an "opening end") that is open and the other end that is closed. The metal container 3 includes an opening portion 5, and the opening portion 5 is constituted by an opening of the metal container 3 and its vicinity. A diameter of the opening portion 5 is set such that the sealing member 2 can be inserted into the opening portion 5. Herein, the opening portion 5 is provided with a narrow portion 7.

The narrow portion 7 is a portion provided between the opening end of the metal container 3 and the solid matter 4 and thinner than the opening (opening end) of the metal container 3. A diameter of the narrow portion 7 is smaller than that of the opening and is set such that the narrow portion 7 can hold the melted sealing member 2. A shape of the narrow portion 7 is not especially limited. An upper end of the narrow portion 7 and the opening end of the metal container 3 may be or may not be spaced apart from each other. In a case where the upper end of the narrow portion 7 and the opening end of the metal container 3 are not spaced apart from each other, the sealing member 2 is mounted on the opening end of the metal container 3 before the heat treatment. In contrast, in a case where the upper end of the narrow portion 7 and the opening end of the metal container 3 are spaced apart from each other, the sealing member 2 is inserted into the opening portion 5 before the heat treatment so as to be located between the opening end of the metal container 3 and the upper end of the narrow portion 7.

The solid matter 4 is contained in the first internal space of the metal container 3. Examples of the solid matter 4 include a support material necessary to maintain the first internal space that is reduced in pressure and a functional material required to be stored in the first internal space that is reduced in pressure.

One example of the support material is a core member including a large number of fine spaces. Even if the first internal space is reduced in pressure, the metal container 3 is prevented from breaking, and the first internal space that is reduced in pressure is maintained by providing the core member in the first internal space. For example, a material, such as glass wool, which is low in heat transfer rate and generates little gas by the heat treatment under reduced pressure may be used as the core member. In a case where such a core member is used as the solid matter 4, the first internal space of the metal container 3 is maintained in a pressure reduced state, and the heat transfer rate of the sealed container 1 configured such that the core member is contained in the first internal space of the metal container 3 becomes low. Therefore, the sealed container 1 itself may be utilized as a vacuum heat insulating body.

One example of the functional material is a gas adsorbing material which adsorbs a gas. The gas adsorbing material supports the metal and secures the first internal space while the gas adsorbing material is stored in the first internal space reduced in pressure until the sealing member 2 is open.

Used as the gas adsorbing material is a material which does not lose its activity or deteriorate by the heat treatment. Used as the gas adsorbing material is a substance which is activated by the heat treatment under reduced pressure. Examples of the gas adsorbing material include alloy getters, such as Ba-based alloy getters, Ti-based alloy getters, Zr-based alloy getters, and Fe-based alloy getters, and copper ion exchange ZSM-5 zeolite. Especially, from the viewpoint of the energy efficiency and the management of the gas adsorbing performance, the copper ion exchange ZSM-5 which is activated by the heat treatment under reduced pressure is preferable as the gas adsorbing material.

Regarding the management of the gas adsorbing performance, an adsorption active site of the copper ion exchange ZSM-5 zeolite is copper ion. A hue of the copper ion exchange ZSM-5 zeolite changes depending on how the copper ion is introduced in the copper ion exchange ZSM-5 zeolite. By utilizing this, the gas adsorbing performance of the copper ion exchange ZSM-5 zeolite can be managed under reduced pressure by colorimetric values.

The colorimetric values are measured by a commercially available spectrocolorimeter. A measuring cell of the spectrocolorimeter is filled with the copper ion exchange ZSM-5 zeolite, and the spectrocolorimeter measures the reflectance, absorptance, transmittance, etc. with respect to light of a wavelength of from 380 to 760 nm. Chromatic coordinates of the copper ion exchange ZSM-5 zeolite are obtained based on the measured numerical values.

The following will show ranges of colorimetric values (chromatic coordinates, reflectance) of the copper ion exchange ZSM-5 zeolite, which provides an adsorption performance, in a case where measurements were performed by a spectrophotometer SE6000 (produced by Nippon Denshoku Industries Co.,Ltd.). In this case, illuminant C was used, and the chromatic coordinates were measured at a viewing angle of two degrees. Regarding the copper ion exchange ZSM-5 zeolite, the activity before the heat treatment and the activity after the heat treatment are different from each other. Therefore, the colorimetric values before the heat treatment and the colorimetric values after the heat treatment were obtained. The copper ion exchange ZSM-5 zeolite was subjected to the heat treatment after the copper ion exchange ZSM-5 zeolite was contained in the metal container 3 and provided in the heat insulating body. Therefore, the copper ion exchange ZSM-5 zeolite subjected to the heat treatment was obtained in such a manner that: the metal container 3 was taken out from the heat insulating body subjected to the heat treatment; the metal container 3 was destroyed; and the copper ion exchange ZSM-5 zeolite was taken out from the first internal space. Then, the copper ion exchange ZSM-5 zeolite subjected to the heat treatment was measured by the spectrophotometer as with the copper ion exchange ZSM-5 zeolite not yet subjected to the heat treatment.

If L*, a*, and b* chromatic coordinates of the copper ion exchange ZSM-5 zeolite not yet subjected to the heat treatment are respectively, for example, 70 ≥ L* ≥ 96, 0 ≥ a* ≥ -6, and -1 ≥ b ≥ -15, the adsorption performance is excellent. More desirably, if those chromatic coordinates are respectively, for example, 75 ≥ L* ≥ 96, -2.5 ≥ a* ≥ -6, and -1 ≥ b ≥ -10, the adsorption performance is further excellent. If the reflectance with respect to the light of a wavelength of from 380 to 580 nm is, for example, 55% or higher and 95% or lower, the excellent adsorption performance is obtained. More desirably, if the reflectance with respect to the light of a wavelength of from 400 to 500 nm is, for example, 60% or higher and 95% or lower, the further excellent adsorption performance is obtained.

The state of the copper ion changes by the heat treatment, and air components are adsorbed to the copper ion exchange ZSM-5 zeolite. With this, the colorimetric values of the copper ion exchange ZSM-5 zeolite subjected to the heat treatment change. Therefore, if the L*, a*, and b* chromatic coordinates of the copper ion exchange ZSM-5 zeolite subjected to the heat treatment are respectively, for example, 88 ≥ L* ≥ 81, 4 ≥ a* ≥ -4, and 12 ≥ b ≥ -4, it is thought that the adsorption performance is excellent. More desirably, if the chromatic coordinates are respectively, for example, 86 ≥ L* ≥ 83, 2 ≥ a* ≥ -2, and 10 ≥ b ≥ -2, the adsorption performance is further excellent. If the reflectance with respect to the light of a wavelength of from 380 to 580 nm is, for example, 50% or higher and 70% or lower, the excellent adsorption performance can be obtained. More desirably, the reflectance with respect to the light of a wavelength of from 400 to 500 nm is, for example, 50% or higher and 70% or lower, the further excellent adsorption performance is obtained.

It is clear that if the colorimetric values of the copper ion exchange ZSM-5 zeolite are within the above ranges, the copper ion exchange ZSM-5 zeolite exerts the excellent gas adsorbing performance. Therefore, the gas adsorbing performance of the copper ion exchange ZSM-5 zeolite is easily determined based on the colorimetric values.

The sealing member 2 is made of glass containing at least alkali earth metal oxide or alkali metal oxide. Examples of the alkali metal oxide include Na₂O, K₂O, Rb₂O, and Cs₂O. Examples of the alkali earth metal oxide include MgO, CaO, BaO, and SrO. Especially, the alkali earth metal oxide is desirable since it chemically binds to the metal container 3 more strongly than the alkali metal oxide. Among the alkali earth metal oxides, BaO and SrO are desirable since each of these further strongly, chemically binds to the metal container 3. An ionization energy of each of Ba and Sr is smaller than that of each of the other alkali earth metal oxides, such as Be, Mg, and Ca. Therefore, it is thought that oxygen atoms binding to Ba and Sr easily, chemically bind to metal oxides on the surface of the metal container 3.

A mole ratio of at least the alkali earth metal oxide or the alkali metal oxide (hereinafter referred to as "the alkali earth metal oxide or the like") is, for example, from 1 to 65%, and preferably from 15 to 60%. If the mole ratio of the alkali earth metal oxide or the like is too high, the sealing member 2 cannot maintain its performance as glass. If the mole ratio of the alkali earth metal oxide or the like is too low, the joining between the sealing member 2 and the metal container 3 becomes weak.

For example, the mole ratio is obtained as below. A sample is prepared by dissolving the sealing member 2 by acid. The weights of respective elements contained in this sample are measured by, for example, ICP emission spectrochemical analysis. A mole of each element is obtained by dividing the weight of the element by the atomic weight of the element. Since the elements exist as oxides in glass, the moles of the elements are converted into the moles of the oxides of the elements. Then, the mole ratio of the alkali earth metal oxide or the like is obtained based on a ratio of the mole of the alkali earth metal oxide or the like to the total of the moles of the oxides of all the elements.

Ajoint portion 6 is a layer formed on the surface of the sealing member 2 and is a portion of the sealing member 2, the portion being joined to the opening portion 5 of the metal container 3. The joint portion 6 is formed inside the opening portion 5 of the metal container 3 by melting the sealing member 2 by heating and solidifying the sealing member 2 by cooling. The joint portion 6 is a portion where the alkali earth metal oxide or the like of the sealing member 2 and the metal oxide formed on the surface of the metal container 3 chemically bind to each other via oxygen.

Here, grounds for "chemical binding" will be explained. When the joint portion 6 was immersed in water to contact a large amount of water, the joint portion 6 was peeled off the sealing member 2. When this water was analyzed by, for example, the ICP emission spectrochemical analysis, alkali earth metal was detected. However, when the sealing member 2 itself was immersed in the water, and this water was analyzed by, for example, the ICP emission spectrochemical analysis, the alkali earth metal was not detected. As a result, it was found out that unlike the sealing member 2, the joint portion 6 is formed by the chemical binding and has a property of being easily dissolved in water. It is thought that this chemical binding is chemical binding of the metal oxide formed on the surface of the metal container 3 and the alkali earth metal oxide via oxygen.

### Method of Manufacturing Sealed Container

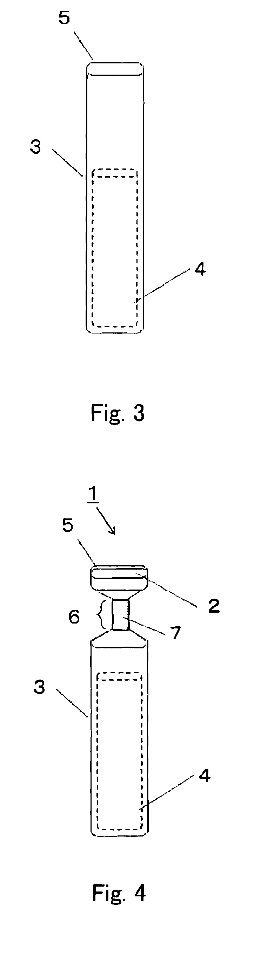

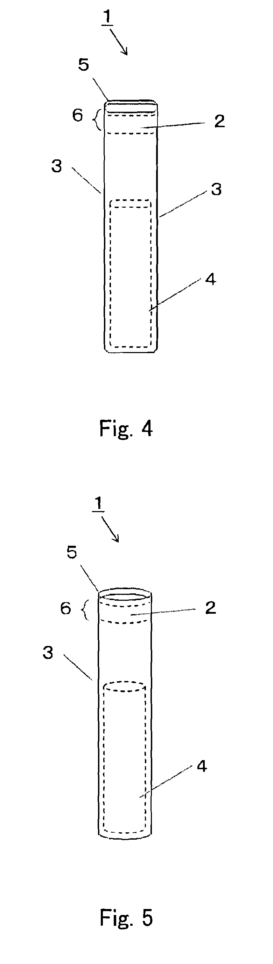

Fig. 2 is a perspective view showing the metal container 3 having the first internal space in which the solid matter 4 is contained. Fig. 3 shows a state where the metal container 3 shown in Fig. 2 is crushed. Fig. 4 shows a state where the sealing member 2 is inserted into the opening portion 5 of the metal container 3 shown in Fig. 3.

As shown in Fig. 2, the solid matter 4 is arranged in the first internal space of the metal container 3 having a cylindrical shape. To reduce the thickness of the metal container 3, the metal container 3 is crushed over the entire axial length of the metal container 3 as shown in Fig. 3. With this, the cross section of the metal container 3 becomes a substantially oval shape or a rectangular, flat shape having rounded corners. Then, as shown in Fig. 4, the opening portion 5 of the metal container 3 is sandwiched to be further crushed. Thus, the narrow portion 7 is formed. Then, by inserting the sealing member 2 into the opening portion 5, the sealing member 2 is held on the narrow portion 7.

The metal container 3 as above is heated in a vacuum heating furnace while reducing the pressure. This heating temperature is suitably determined, but for example, is set to a temperature at which the sealing member 2 is partially or entirely melted. With this, the first internal space is reduced in pressure to become the vacuum state, and the sealing member 2 melts. The melted sealing member 2 flows into the narrow portion 7 and stays at the narrow portion 7 by, for example, surface tension. Next, when the temperature of the vacuum heating furnace is reduced in a state where the vacuum heating furnace is in the pressure reduced state, the metal container 3 is cooled. With this, the melted sealing member 2 is solidified. In addition, the metal container 3 expanded by heat contracts.

At this time, the alkali earth metal oxide or the like contained in the sealing member 2 made of glass and the metal oxide formed on the surface of the metal container 3 chemically bind to each other. With this, the opening portion 5 of the metal container 3 and the sealing member 2 are chemically joined to each other. In addition, the metal container 3 contracts more than the sealing member 2. Therefore, since the opening portion 5 of the metal container 3 holds the periphery of the sealing member 2, the opening portion 5 of the metal container 3 and the sealing member 2 are mechanically joined to each other. By these chemical joining and mechanical joining, the opening of the metal container 3 is closed by the sealing member 2 without a gap between the opening portion 5 of the metal container 3 and the sealing member 2. Thus, the metal container 3 is sealed. With this, the sealed container 1 is formed.

Conditions of the heat treatment and the cooling treatment are not especially specified and are appropriately selected depending on the combination of the sealing member 2 and the metal container 3. Here, the heat treatment is performed under reduced pressure. Therefore, if the heating temperature is too high, a deoxygenation reaction occurs in the glass composition of the sealing member 2 and the metal oxide of the metal container 3. With this, the metal contained in the glass composition and the metal of the metal oxide may form an alloy, and the alloy may peel off. Therefore, it is desirable that the heating temperature be, for example, 700°C or lower.

### Actions and Effects

According to the sealed container 1 of Embodiment 1, when the sealing member 2 made of glass is melted by the heat treatment, the diffusion and migration of the elements occur in the glass composition. With this, since the alkali earth metal oxide or the like is highly compatible with the metal oxide on the surface of the metal container 3, the alkali earth metal oxide or the like increases at the joint portion 6 contacting the metal container 3. Then, it is thought that the alkali earth metal oxide or the like of the sealing member 2 and the metal oxide of the metal container 3 strongly, chemically bind to each other via oxygen. As a result, excellent airtightness between the opening portion 5 of the metal container 3 and the sealing member 2 is realized, and the opening portion 5 of the metal container 3 and the sealing member 2 are strongly joined to each other.

The thermal expansion coefficient of the metal container 3 made of aluminum is higher than that of the sealing member 2 made of glass. Therefore, in the cooling treatment performed after the heat treatment, the metal container 3 made of aluminum contracts more than the sealing member 2 made of glass inserted into the opening portion 5 of the metal container 3. With this, by a stress generated by the difference between these thermal expansion coefficients, the opening portion 5 of the metal container 3 tightens the sealing member 2. With this, the metal container 3 is more strongly joined to the sealing member 2. Thus, the airtightness of the sealed container 1 becomes excellent.

Further, the ductility of the metal container 3 made of aluminum is higher than that of the sealing member 2 made of glass. Therefore, when the metal container 3 contracts by the cooling treatment, the metal container 3 does not destroy the sealing member 2 or break, but flexibly deforms along the shape of the sealing member 2. With this, the opening portion 5 of the metal container 3 tightly adheres to the sealing member 2, and the gap between the opening portion 5 of the metal container 3 and the sealing member 2 is not likely to be formed. With this, the metal container 3 is strongly joined to the sealing member 2. Thus, the airtightness of the sealed container 1 becomes excellent.

Further, the metal container 3 made of aluminum has the ductility. Therefore, when an external force is applied to the sealing member 2 from above the metal container 3, the metal container 3 deforms easily. With this, the external force is transmitted to the sealing member 2, and the sealing member 2 is destroyed easily. Thus, the sealed container 1 is easily open.

In a case where the gas adsorbing material which is activated by the heat treatment is used as the solid matter 4, the activation of the gas adsorbing material and the melting of the sealing member 2 are performed by a single heat treatment. Therefore, the energy consumption for the heat treatment is suppressed. Thus, the energy efficiency becomes excellent.

Further, in a case where the gas adsorbing material which may be activated under a pressure reduced state is used as the solid matter 4, the gas adsorbing material may be activated in a state where the first internal space is reduced in pressure. With this, the activated gas adsorbing material does not adsorb unnecessary gas or water. Thus, the deterioration of the gas adsorbing material is suppressed.

According to the sealed container 1 configured as above, the melted sealing member 2 is fixed to the narrow portion 7, and the opening portion 5 of the metal container 3 and the sealing member 2 contact each other by their surfaces. With this, a joint area therebetween becomes large, so that a joint force therebetween becomes strong. Thus, the metal container 3 can be surely sealed.

The narrow portion 7 is formed by deforming the opening portion 5 of the metal container 3. Therefore, without providing, for example, a supporting portion provided for the sealing member 2 separately from the metal container 3, the melted sealing member 2 can be supported by a simple structure.

Further, when the sealing member 2 is inserted into the opening portion 5 of the metal container 3 before the heat treatment, the sealing member 2 is supported by an upper end of the narrow portion 7. With this, the sealing member 2 can be easily, surely arranged in the opening portion 5.

Hereinafter, results of evaluations of a joint strength between the sealing member 2 and the metal container 3 in the sealed container 1 will be explained. In these evaluations, the sealed containers 1 of Examples 1 to 5 and Comparative Example 1 were used. The joint strength was evaluated by two methods that are an appearance evaluation and a measurement evaluation. In the appearance evaluation, the sealed container 1 was dropped from a height of one meter, and whether or not the sealing member 2 was peeled off the metal container 3 was visually confirmed. It was determined that the joint strength was low if the sealing member 2 was peeled off, and the joint strength was high if the sealing member 2 was not peeled off. The measurement evaluation was performed by using an autograph produced by Shimadzu Corporation according to a T-peel strength test. Specifically, opposing portions of the opening portion 5 of the metal container 3 are fixed to a measurement jig, and the measurement jig is pulled and moved in a direction so as to widen the opening. With this, the opening portion 5 deforms, and the sealing member 2 is peeled off the opening portion 5. A pull strength is obtained from a travel distance and pull strength of the jig at this time.

### Example 1

In the sealed container 1 of Example 1, used as the sealing member 2 was glass containing ZnO·P₂O₅·K₂O and having the thermal expansion coefficient of 120×10⁻⁷/°C and the softening temperature of 420°C. Used as the metal container 3 was a cylinder made of SUS301. The SUS301 has the thermal expansion coefficient of 16.9×10⁻⁶/°C and hardness of 165 Hv. Used as the solid matter 4 was alloy powder that shows a gas adsorption activity by the heat treatment under reduced pressure.

After the solid matter 4 was provided in the metal container 3, the metal container 3 was entirely crushed to have a substantially flat shape. The narrow portion 7 was formed by applying the external force to the opening portion 5 of the metal container 3 to reduce the width of the opening portion 5. Then, the sealing member 2 was provided on the narrow portion 7. After the gas and water contained in the gas adsorbing material were desorbed in the vacuum heating furnace at about 100°C, the gas adsorbing material was appropriately activated at about 500°C, and then, the sealing member 2 was melted at 550°C. After the heat treatment, the vacuum heating furnace was cooled in the vacuum state up to normal temperature. Thus, the sealed container 1 was manufactured.

In the sealed container 1 manufactured as above, the sealing member 2 was joined to the metal container 3, and the gap was not formed between the sealing member 2 and the metal container 3. In the appearance evaluation after the sealed container 1 was dropped, the gap was not formed between the sealing member 2 and the metal container 3. Thus, the joint strength was evaluated as high. It was thought that this high joint strength was obtained by chemical joint realized by the chemical binding at the joint portion 6 and mechanical joint realized by the tightening of the metal container 3. In the measurement evaluation of the sealed container 1, a peel strength was 0.80 N/mm².

### Example 2

The sealing member 2 and solid matter 4 of the sealed container 1 of Example 2 are the same as those of Example 1, but the metal container 3 of the sealed container 1 of Example 2 is different from that of Example 1. Used as the metal container 3 was a cylinder made of copper having the thermal expansion coefficient of 17.0×10⁻⁶/°C and the hardness of 46 Hv. A method of manufacturing the sealed container 1 of Example 2 is also the same as that of Example 1.

In the manufactured sealed container 1, the gap was not formed between the sealing member 2 and the metal container 3. In the appearance evaluation after the sealed container 1 was dropped, the gap was not formed between the sealing member 2 and the metal container 3. Thus, the joint strength was evaluated as high. It was thought that this high joint strength was obtained by the chemical joint realized by the chemical binding at the joint portion 6 and the mechanical joint realized by the tightening of the metal container 3.

In the measurement evaluation of the sealed container 1, the peel strength was 1.0 N/mm². This peel strength is higher than that of Example 1. This may be because since a layer of metal oxide is formed on the surface of copper more easily than SUS301, the copper strongly, chemically binds to K₂O of the sealing member 2.

The hardness of copper is lower than that of SUS301. Therefore, if the external force is applied to the metal container 3 made of copper, the force is transmitted to the sealing member 2, and the sealing member 2 is easily destroyed. Thus, the sealed container 1 is easily open.

### Example 3

The sealing member 2 and solid matter 4 of the sealed container 1 of Example 3 are the same as those of Example 1, but the metal container 3 of the sealed container 1 of Example 3 is different from that of Example 1. Used as the metal container 3 was a cylinder made of aluminum having the thermal expansion coefficient of 23.9×10⁻⁶/°C and the hardness of 25 Hv. A method of manufacturing the sealed container 1 of Example 3 is the same as that of Example 1.

In the manufactured sealed container 1, the gap was not formed between the sealing member 2 and the metal container 3. In the appearance evaluation after the sealed container 1 was dropped, the gap was not formed between the sealing member 2 and the metal container 3. Thus, the joint strength was evaluated as high. It was thought that this high joint strength was obtained by the chemical joint realized by the chemical binding at the joint portion 6 and the mechanical joint realized by the tightening of the metal container 3.

In the measurement evaluation of the sealed container 1, the peel strength was 1.1 N/mm². This peel strength is higher than each of the peel strengths of Examples 1 and 2. This may be because since a layer of metal oxide is formed on the surface of aluminum more easily than SUS301 or copper, the aluminum strongly, chemically binds to K₂O of the sealing member 2.

### Example 4

The solid matter 4 and metal container 3 of the sealed container 1 of Example 4 are the same as those of Example 3, but the sealing member 2 of the sealed container 1 of Example 4 is different from that of Example 3. Used as the sealing member 2 was glass containing ZnO· P₂O₅·CaO and having the thermal expansion coefficient of 80×10⁻⁷/°C and the softening temperature of 500°C. A method of manufacturing the sealed container 1 of Example 4 is the same as that of Example 1 except for the heat treatment. In the heat treatment of Example 4, after the gas and water contained in the gas adsorbing material were desorbed at about 100°C, the gas adsorbing material was appropriately activated at about 580°C, and then, the sealing member 2 was melted at 620°C.

In the manufactured sealed container 1, the gap was not formed between the sealing member 2 and the metal container 3. In the appearance evaluation after the sealed container 1 was dropped, the gap was not formed between the sealing member 2 and the metal container 3. Thus, the joint strength was evaluated as high. It was thought that this high joint strength was obtained by the chemical joint realized by the chemical binding at the joint portion 6 and the mechanical joint realized by the tightening of the metal container 3.

In the measurement evaluation of the sealed container 1, the peel strength was 1.4 N/mm². This peel strength is higher than that of Example 3. This may be because CaO of the alkali earth metal of the sealing member 2 chemically binds to the metal oxide on the surface of the metal container 3 more strongly than K₂O of alkali metal.

### Example 5

The solid matter 4 and metal container 3 of the sealed container 1 of Example 5 are the same as those of Example 3, but the sealing member 2 of the sealed container 1 of Example 5 is different from that of Example 3. Used as the sealing member 2 was glass containing Bi₂O₂·B₂O₃·SrO·BaO·ZnO and having the thermal expansion coefficient of 110×10⁻⁷/°C and the softening temperature of 420°C. A method of manufacturing the sealed container 1 of Example 5 is the same as that of Example 1 except for the heat treatment. In the heat treatment of Example 5, after the gas and water contained in the gas adsorbing material were desorbed at about 100°C, the gas adsorbing material was appropriately activated at about 500°C, and then, the sealing member 2 was melted at 600°C.

In the manufactured sealed container 1, the gap was not formed between the sealing member 2 and the metal container 3. In the appearance evaluation after the sealed container 1 was dropped, the gap was not formed between the sealing member 2 and the metal container 3. Thus, the joint strength was evaluated as high. It was thought that this high joint strength was obtained by the chemical joint realized by the chemical binding at the joint portion 6 and the mechanical joint realized by the tightening of the metal container 3.

In the measurement evaluation of the sealed container 1, the peel strength was 2.0 N/mm². This peel strength is higher than that of Example 4. This may be because SrO and BaO of the sealing member 2 chemically bind to the metal oxide on the surface of the metal container 3 more strongly than CaO.

### Comparative Example

A metal container, sealing member, and solid matter of a sealed container of Comparative Example are the same as corresponding members of the sealed container 1 of Example 5, but a method of manufacturing the sealed container of Comparative Example is different from the method of Example 5. To be specific, used in the sealed container 1 of Example 5 was the metal container 3 in which the narrow portion 7 was formed at the opening portion 5 by crushing the opening portion 5 in a substantially flat shape. The sealing member 2 intruded into the narrow portion 7 in the metal container 3, and the sealing member 2 chemically bound to the metal container 3 thereat. Thus, the joint portion 6 spreading in a planar shape was formed. In contrast, used in the sealed container of Comparative Example was the metal container having a cylindrical shape. The sealing member did not intrude into the metal container, and the opening end of the metal container and the sealing member were joined to each other. Thus, the joint portion 6 having a linear shape was formed.

In the manufactured sealed container, the gap was not formed between the sealing member and the metal container. However, in the appearance evaluation after the sealed container was dropped, the sealing member was peeled off the metal container. Thus, the joint strength was evaluated as low. It was thought that the joint strength was low because an area of the chemical binding was small, and there was no mechanical joint realized by the tightening of the metal container.

### Modification Example 1

As shown in Fig. 1, the narrow portion 7 is formed at the opening portion 5 of the metal container 3. However, as shown in Fig. 5, the narrow portion 7 may not be formed at the opening portion 5. In this case, a supporting portion for supporting the melted sealing member 2 is provided between the opening and the solid matter 4. Examples of this supporting portion include an inorganic fiber assembly and filter having gas permeability and heat resistance, and a projection. When the metal container 3 at which the supporting portion is provided is subjected to the heat treatment, the supporting portion supports the melted sealing member 2. With this, the sealing member 2 is held by the opening portion 5 of the metal container 3. Thus, the opening of the metal container 3 can be surely sealed. The projection projects from the opening portion 5 toward an inner side such that the opening portion 5 of the metal container 3 is reduced in diameter. The height of the projection is determined based on, for example, the viscosity of the melted sealing member 2. The projection may be formed integrally with the metal container 3 or may be a member formed separately from the metal container 3 and attached to an inner portion of the metal container 3.

### Modification Example 2

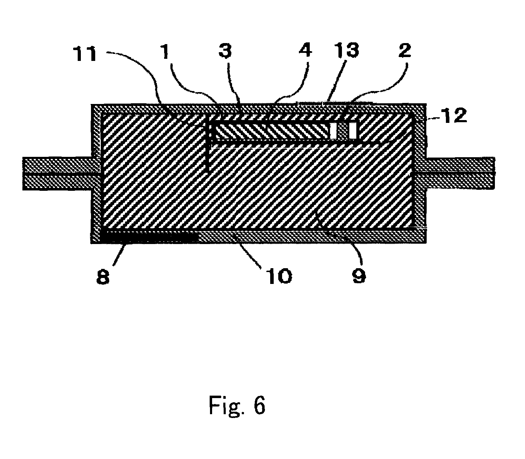

As shown in Fig. 1, the metal container 3 is crushed in a substantially flat shape. However, as shown in Fig. 6, the metal container 3 having a cylindrical shape may be used. The narrow portion 7 is formed at the opening portion 5 in Fig. 1, but a support portion for supporting the melted sealing member 2 may not be provided. In this case, the size of the opening portion 5 may be set to be smaller than the size of the sealing member 2 not yet subjected to the heat treatment. In this case, the sealing member 2 can be arranged on the opening end of the metal container 3 before the heat treatment.

### Embodiment 2

### Configuration of Vacuum Heat Insulating Body

Fig. 1 is a cross-sectional view schematically showing a vacuum heat insulating body 8 according to Embodiment 2 of the present invention.

The vacuum heat insulating body 8 includes: the sealed container 1 as a gas adsorption device 1; a core member 9; and an outer coat member 10 having a second internal space in which the gas adsorption device 1 and the core member 9 are contained and which is reduced in pressure and sealed.

The outer coat member 10 is hollow and includes the internal space (hereinafter referred to as the "second internal space") that is so-called vacuum. Here, the so-called vacuum denotes a state where pressure is lower than atmospheric pressure. For example, the degree of vacuum of the second internal space is 1 to 200 Pa. The outer coat member 10 is constituted by a film having a gas barrier property by which the intrusion of water, gas, and the like into the second internal space is blocked. Regarding the gas barrier property, a gas transmission rate is, for example, 104 [cm³/m²·day·atm] or lower. It is desirable that the gas transmission rate be 103 [cm³/m²·day·atm] or lower, and it is further desirable that the gas transmission rate be 102 [cm³/m²·day·atm] or lower. Used as the outer coat member 10 is, for example, a laminated film obtained by stacking a resin film, aluminum foil, and the like.

The laminated film is a sheet manufactured by laminating a stacked body. The stacked body is a sheet manufactured by stacking a heat weld film as an innermost layer, a gas barrier film as an intermediate layer, and a surface protection film as an outermost layer.

The heat weld film that is the innermost layer is not especially specified, and for example, thermoplastic resin or a mixture of thermoplastic resin is used as the heat weld film. Examples of the thermoplastic resin include a low-density polyethylene film, a linear low-density polyethylene film, a high-density polyethylene film, a polypropylene film, and a polyacrylonitrile film.

The gas barrier film that is the intermediate layer is not especially specified, and for example, metal foil or a metal deposition film is used as the gas barrier film. Examples of the metal foil include aluminum foil and copper foil. The metal deposition film is formed by, for example, depositing metal, such as aluminum or copper, or metal oxide on a resin film. Examples of resin of the resin film include a polyethylene terephthalate film and an ethylene-vinylalcohol copolymer.

The surface protection film that is the outermost layer is not especially specified, and a resin film, such as a nylon film, a polyethylene terephthalate film, or a polypropylene film, is used as the surface protection film.

The core member 9 is contained in the second internal space of the outer coat member 10 and is a framework member of the vacuum heat insulating body 8, the framework member being configured to maintain the second internal space that is vacuum. In the vacuum second internal space of the outer coat member 10, the core member 9 includes therein a large number of fine spaces and supports the outer coat member 10 to maintain the internal space of the outer coat member 10. The core member 9 is a porous substance, and open-cell foam of a polymer material, such as polystyrene or polyurethane, open-cell foam of an inorganic material, inorganic or organic powder, an inorganic or organic fibrous material, or the like may be utilized as the core member 9. Used as the core member 9 is, for example, fiber which is low in heat conductivity and high in heat resistance, and generates little gas in a vacuum state or a high-temperature state. Examples of the fiber include inorganic fiber, such as glass wool, rock wool, alumina fiber, and metal fiber, and resin fiber, such as polyethylene terephthalate. Among these, the glass wool is preferable since it is high in elasticity, low in heat conductivity, and industrially inexpensive. The thinner the fiber is, the lower the heat conductivity of the vacuum heat insulating body 8 becomes. Therefore, thin fiber is preferable. However, since such fiber is expensive, the diameter of the fiber is selected in consideration of the cost and the heat conductivity. For example, as the fiber for the vacuum heat insulating body 8, an aggregate of glass wool which is commonly used, comparatively inexpensive, and has an average fiber diameter of about 3 to 6 µm is desirable.

The core member 9 has a three-dimensional shape, such as a substantially rectangular solid that is small in thickness. The core member 9 is constituted by one fiber sheet or a plurality of stacked thin fiber sheets. The core member 9 constituted by stacking a plurality of fiber sheets is provided with a cut 11 extending in its stack direction.

The cut 11 is an insertion opening through which the gas adsorption device 1 is inserted into the core member 9. The cut 11 communicates with the space in which the gas adsorption device 1 is contained. The cut 11 is a cut line formed perpendicularly with respect to the surface of the core member 9 and has, for example, a rectangular shape. The width of the cut 11 in a direction parallel to the surface of the core member 9 is larger than the width of the gas adsorption device 1. The cut 11 extends from the surface of the core member 9 to an inner portion of the core member 9, and the depth of the cut 11 in a direction perpendicular to the surface of the core member 9 is larger than the thickness of one or more fiber sheets. Therefore, one or more fiber sheets are cut.

A storage space 12 for the gas adsorption device 1 is formed inside the core member 9. The storage space 12 for the gas adsorption device 1 may be formed by cutting the core member 9 or may be formed inside the core member 9 in advance. In a case where the storage space 12 for the gas adsorption device 1 is formed by cutting the core member 9, the fiber sheet cut due to the formation of the cut 11 is peeled off, and a tear 12 formed in this manner is used as the storage space 12. The tear 12 is formed parallel to the surface of the core member 9 and between the stacked fiber sheets. The tear 12 and the cut 11 are connected to each other to form an L shape in a direction perpendicular to the surface of the core member 9. Therefore, the gas adsorption device 1 is inserted through the cut 11 to the tear 12.

The gas adsorption device 1 is a member configured to adsorb thermally-conductive gas components remaining in or intruding into the second internal space of the outer coat member 10. The gas adsorbing material is contained in the first internal space of the metal container 3, the first internal space is reduced in pressure, and the opening portion 5 of the metal container 3 is sealed by the sealing member 2. As the gas adsorbing material, a chemical adsorption material, such as calcium oxide or magnesium oxide, a physical adsorption material, such as zeolite, or a mixture of those may be used. In addition, copper ion-exchanged ZSM-5 zeolite having a chemical adsorption property and a physical adsorption property may be used. Used as the metal container 3 is aluminum, copper metal, resin, or the like. As the sealing member 2, a material capable of sealing a metal container and weaker than the metal container 3 is used. For example, glass containing alkali metal oxide or alkali earth metal oxide is used.

The gas adsorption device 1 is contained in the tear 12 formed inside the core member 9. The shape of the gas adsorption device 1 is not especially limited and may correspond to, for example, the shape of the vacuum heat insulating body 8. For example, in the vacuum heat insulating body 8 having a substantially flat shape that is small in thickness, the gas adsorption device 1 having a substantially flat cross-sectional shape whose width is larger than the thickness thereof is used. In this case, the gas adsorption device 1 is arranged such that a short axis (thickness) of the substantially flat cross section thereof extends in a thickness direction of the vacuum heat insulating body 8, and a long axis (width) of the substantially flat cross section thereof is parallel to the surface of the vacuum heat insulating body 8. With this, the gas adsorption device 1 is arranged such that the short axis (thickness) of the substantially flat cross section thereof extends in the thickness direction of the vacuum heat insulating body 8. A mark 13 is formed at a portion on the surface of the vacuum heat insulating material, the portion corresponding to a place where the gas adsorption device 1 is arranged.

The mark 13 indicates the position of the gas adsorption device 1 provided inside the outer coat member 10 and especially indicates the position of the opening portion 5 of the gas adsorption device 1. The mark 13 is put at a portion of the outer coat member 10, the portion opposed to (corresponding to) a portion where the gas adsorption device 1 is arranged. The type, shape, and the like of the mark 13 are not especially limited as long as the position of the gas adsorption device 1 can be recognized from the outside of the outer coat member 10. For example, the mark 13 may be a mark put on an outer surface of the outer coat member 10 or a seal attached to the outer surface of the outer coat member 10. For example, the mark 13 may be printed on the outer coat member 10 when manufacturing the outer coat member 10 or when printing a lot number on the vacuum heat insulating body 8. Or, after the manufacture of the vacuum heat insulating body 8, the mark 13 may be put by a person using ink or the like.

The mark 13 indicating the installation position of the gas adsorption device 1, especially the position of the sealing portion 9 is printed on the outer coat member 106, and this position is a position to which the external force is applied when opening the gas adsorption device 1.

### Manufacture of Vacuum Heat Insulating Body

A method of manufacturing the vacuum heat insulating body 8 is not especially limited. For example, the core member 9 is placed with the surface facing upward, and the core member 9 is cut from the surface thereof toward the inner portion thereof. Thus, the cut is formed on the core member 9. By peeling off the fiber sheet cut due to the formation of the cut 11, the tear 12 is formed inside the core member 9. Then, by inserting the gas adsorption device 1 through the cut 11 into the tear 12, the gas adsorption device 1 is contained in the tear 12. At this time, since a tip end portion of the gas adsorption device 1 at which the sealing member 2 is arranged is first inserted into the cut 11, a rear end portion of the gas adsorption device 1 is located in the vicinity of the cut 11. Then, the gas adsorption device 1 is arranged in the core member 9 such that the short axis (thickness) of the substantially flat cross section thereof extends in the thickness direction of the core member 9. By the cut 11, the movement of the gas adsorption device 1 in a direction parallel to the surface of the core member 9 is restricted.

One laminated film is bent such that the heat weld film that is the innermost layer is located on the inner side. Then, two sides of the bent laminated film are heated, so that the heat weld film is welded to itself. Thus, the laminated film having a bag shape whose one side is open is formed. The core member 9 in which the gas adsorption device 1 is contained is inserted through this opening into the laminated film, and the laminated film is arranged under reduced pressure in a chamber to which a vacuum pump is connected. When the inside of the chamber is reduced in pressure to about 10 Pa, the heat weld film is thermally welded to itself such that the opening of the laminated film having the bag shape is closed. With this, the outer coat member 10 is sealed in a state where the second internal space is vacuum. The mark 13 is put on the outer coat member 10 and arranged at a position corresponding to the position of the gas adsorption device 1. Thus, the vacuum heat insulating body 8 in which the second internal space is vacuum is completed.

In the manufacture of the vacuum heat insulating body 8, the outer coat member 10 is formed by closing three sides of one laminated film. However, the outer coat member 10 is similarly formed by closing four sides of two laminated films.

### Use of Vacuum Heat Insulating Body

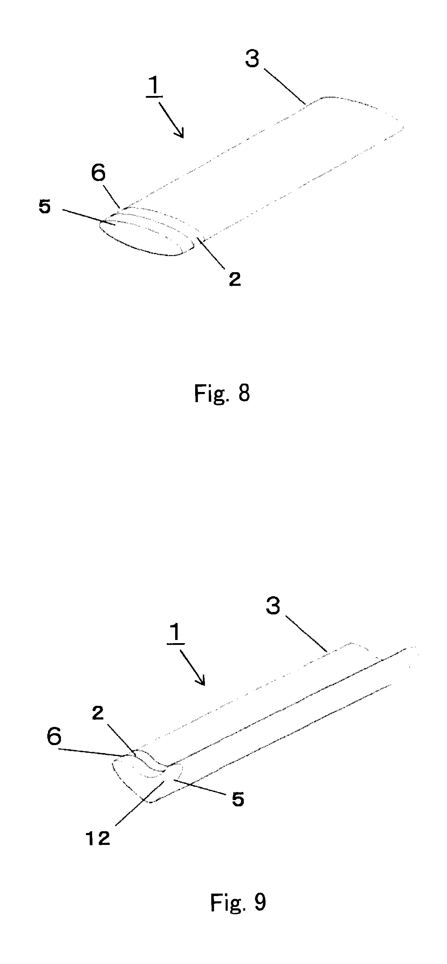

Hereinafter, operations of the vacuum heat insulating body 8 configured as above will be explained. Fig. 8 is a perspective view showing the gas adsorption device 1 contained in the vacuum heat insulating body 8. Fig. 9 is a perspective view showing the deformed gas adsorption device 1.

As shown in Fig. 7, the vacuum heat insulating body 8 is placed with the mark 13 facing upward. By applying the external force toward the mark 13 in a direction parallel to the substantially flat cross section, the outer coat member 10 and the core member 9 are pushed down. Then, the external force acts on the sealing member 2 of the gas adsorption device 1 located at a position corresponding to the mark 13. In the gas adsorption device 1 of Fig. 8, the metal container 3 is bent and deformed as shown in Fig. 9. Then, the external force acts on the sealing member 2, and the weak sealing member 2 is destroyed. With this, a through hole 14 is formed at the sealing member 2, and the first internal space inside the metal container 3 and the second internal space outside the metal container 3 communicate with each other. Therefore, the gas adsorbing material in the first internal space adsorbs the thermally-conductive gas components remaining in the second internal space and the thermally-conductive gas components intruding into the second internal space. As a result, the second internal space is maintained in a vacuum state, for example, at 1 Pa or lower. Thus, the vacuum heat insulating body 8 can maintain the excellent heat insulation performance.

### Actions and Effects

According to the above configuration, the second internal space is maintained in a vacuum state by containing the gas adsorption device 1 in the second internal space of the outer coat member 10. Therefore, the heat insulation performance of the vacuum heat insulating body 8 is prevented from deteriorating.

The mark 13 is put at the portion corresponding to the installation position of the gas adsorption device 1. Therefore, by applying the external force to the mark 13, the sealing member 2 is surely destroyed. On this account, the function of the gas adsorption device 1 is fulfilled in the vacuum heat insulating body 8. Thus, the degree of vacuum of the vacuum heat insulating body 8 is maintained, and therefore, the heat insulation property of the vacuum heat insulating body 8 is maintained.

Further, since the gas adsorption device 1 is open by the external force, it is unnecessary to provide, for example, a tool for opening the gas adsorption device 1. Thus, the adsorption device is easily, surely open. In addition, a trouble is prevented from occurring, in which, for example, the surface of the vacuum heat insulating body 8 bulges by a seal opening member, and the outer coat member 106 is rubbed and tears.

The sealing member 2 is destroyed inside the outer coat member 10, and therefore, the through hole 14 is formed. With this, the performance of the gas adsorption device 1 is fulfilled. Therefore, for example, to investigate causes of a failure regarding the performance of the vacuum heat insulating body 8, the gas adsorption device 1 is taken out from the vacuum heat insulating body 8, and how the through hole 14 is formed at the sealing member 2 is observed. With this, whether or not the adsorption device is functioning can be confirmed.

Further, since the gas adsorption device 1 is provided inside the core member 9, the core member 9 serves as a buffer. Therefore, the gas adsorption device 1 is prevented from being open mistakenly.

The opening portion 5 of the metal container 3 of the gas adsorption device 1 is formed in a tubular shape having a substantially flat cross section, and the gas adsorption device 1 is arranged such that the short axis of the substantially flat cross section thereof extends in a direction perpendicular to the surface of the vacuum heat insulating body 8. Therefore, when the external force is applied in a direction parallel to the substantially flat cross section, the external force acts on the opening portion 5 in a direction along the short axis of the substantially flat cross section such that the sealing member 2 is bent. The strengths of the opening portion 5 and the sealing member 2 with respect to the external force acting in the direction along the short axis of the substantially flat cross section are respectively smaller than those of the opening portion 5 and the sealing member 2 with respect to the external force acting in a direction along the long axis of the substantially flat cross section. With this, the sealing member 2 is easily, surely destroyed, and therefore, the through hole 14 is formed.

Further, the cut 11 formed on the core member 9 communicates with the tear 12 formed inside the core member 9. Therefore, the gas adsorbing material is inserted through the cut 11 into the tear 12, and the gas adsorption device 1 is contained in the tear 12. By the cut 11, the movement of the gas adsorption device 1 in a direction parallel to the surface of the core member 9 is restricted.

### Modification Example 3

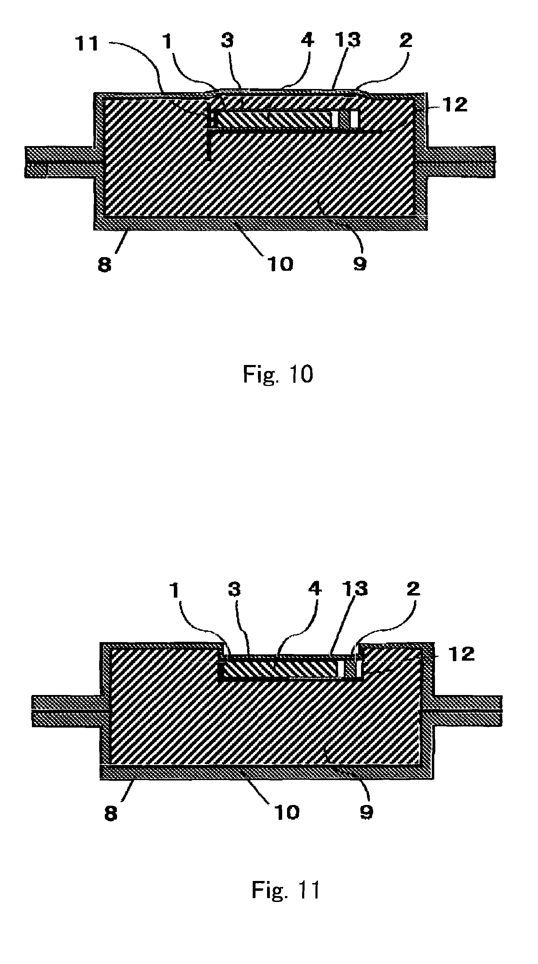

In the vacuum heat insulating body 8 according to Embodiment 2, the mark 13 is the mark or seal put on the outer surface of the outer coat member 10. However, the mark 13 may be a depression, projection, cut, or the like formed on the outer coat member 10. Therefore, the cut 11 of the core member 9 may serve as the mark 13 indicating the installation position of the gas adsorption device 1. As shown in Fig. 10, by containing the gas adsorption device 1 in the core member 9, the surface of the core member 9 bulges outward in a range corresponding to the gas adsorption device 1. Since this bulge appears on the outer coat member 10, this bulge may also serve as the mark 13 indicating the position of the gas adsorption device 1. Further, as shown in Fig. 11, in a case where a recess is formed on the core member 9, and the gas adsorption device 1 is contained in the recess, this recess appears on the outer coat member 10. Therefore, the recess may serve as the mark 13 indicating the position of the gas adsorption device 1.

### Modification Example 4

In the vacuum heat insulating body 8 according to Embodiment 2, the gas adsorption device 1 is contained in the core member 9. However, the gas adsorption device 1 may be arranged on the surface of the core member 9. In this case, the cut 11 and the accommodating space 12 of the gas adsorption device are not formed.

### Embodiment 3

In Embodiment 2, the gas adsorption device 1 is included in the vacuum heat insulating body 8. However, in Embodiment 3, the gas adsorption device 1 is contained in an inner bag 15, and a water adsorbent 16 is included in the vacuum heat insulating body 8.

### Configuration of Vacuum Heat Insulating Body

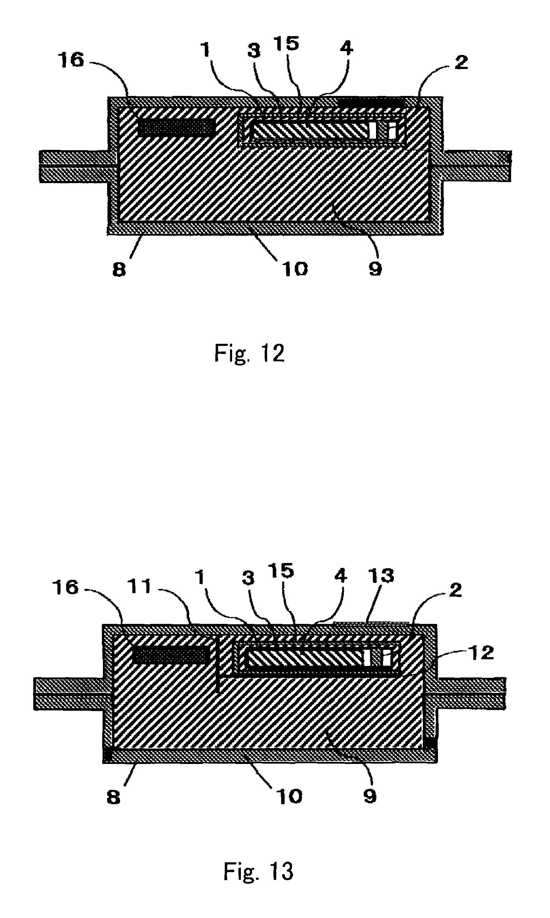

Fig. 12 is a cross-sectional view showing the vacuum heat insulating body 8 according to Embodiment 3.

The inner bag 15 is provided in the second internal space of the outer coat member 10 and serves as a movement suppressing portion configured to suppress a displacement of the gas adsorption device 1. Used as the inner bag 15 is a material having a high frictional force, and one example of such a material is nonwoven fabric made of Japanese paper or resin, such as PE. Especially, the inner bag 15 is made of an elastic material, and one example of the elastic material is nonwoven fabric made of resin, such as PP or PET. The elastic material is soft and not likely to deform. With this, the generation of appearance abnormalities, such as scratches and depressions, on the gas adsorption device 1 by the inner bag 15 is prevented. The nonwoven fabric made of the resin is preferable since it contains less water and is less likely to tear than Japanese paper. Especially, the nonwoven fabric made of PP or PET is preferable since it is high in tensile strength, tear strength, and heat resistance and low in cost and therefore can be manufactured at a low cost by a simple manufacturing process.

The inner bag 15 contains a part of the gas adsorption device 1 or the entire gas adsorption device 1. The inner bag 15 has a shape whose three sides or four sides are closed. In a case where four sides of the inner bag 15 are closed, used as a material of the inner bag 15 is a material having gas permeability. The inner bag 15 whose four sides are closed is preferable since the gas adsorption device 1 is not likely to be detached.

The water adsorbent 16 is a material that adsorbs the steam remaining in or intruding into the second internal space of the vacuum heat insulating body 8. As the water adsorbent 16, a chemical adsorption material, such as calcium oxide or magnesium oxide, a physical adsorption material, such as zeolite, or a mixture of those is used.

### Actions and Effects

According to the above configuration, the gas adsorption device 1 is wrapped up with the inner bag 15. Therefore, the displacement of the gas adsorption device 1 by the friction between the inner bag 15 and the core member 9 when arranging the gas adsorption device 1 in the core member 9 or when wrapping up the core member 9 with the outer coat member 10 is prevented. With this, the position of the sealing member 2 of the gas adsorption device 1 can be easily specified, and therefore, the decrease in productivity is suppressed. In addition, the external force is surely applied to the gas adsorption device 1, so that the gas adsorption device 1 is open.

Further, since the inner bag 15 serves as a buffer for the gas adsorption device 1, the gas adsorption device 1 is prevented from being open mistakenly.

Since the displacement of the gas adsorption device 1 is prevented by the inner bag, the outer coat member 10 is prevented from being rubbed and tearing by the displaced gas adsorption device 1.

Further, both the gas adsorption device 1 and the water adsorbent 16 are used. With this, the moisture of the gas in the second internal space of the vacuum heat insulating body 8 is adsorbed in advance by the water adsorbent 16 that is inexpensive. After that, when the gas adsorption device 1 is open, it adsorbs the gas in the second internal space other than the moisture. Therefore, the amount of use of the expensive gas adsorption substance is reduced, so that the cost is reduced.

### Modification Example 5

The vacuum heat insulating body 8 according to Embodiment 3 does not have to include the water adsorbent 16.

### Modification Example 6

Further, the mark 13 according to Embodiment 2 may be put on the outer coat member 10 of the vacuum heat insulating body 8 according to Embodiment 3. By the mark 13, the position of the sealing member 2 of the gas adsorption device 1 can be easily recognized from outside.

### Modification Example 7

As shown in Fig. 13, the cut and the accommodating space of the gas adsorption device 1 according to Embodiment 2 may be provided at the core member 9 of the vacuum heat insulating body 8 according to Embodiment 3. In this case, the gas adsorption device 1 wrapped up with the inner bag 15 is contained in the storage space 12 formed inside the core member 9. The movement of the gas adsorption device 1 is restricted by the friction between the inner bag 15 and an inner surface of the storage space 12 in addition to the friction between the gas adsorption device 1 and the inner bag 15. With this, in addition to the inner bag 15, the inner surface of the space in which the gas adsorption device 1 is contained serves as the movement suppressing portion.

### Modification Example 8

Further, in the vacuum heat insulating body 8 according to Embodiment 3, the sealing member 2 of the gas adsorption device 1 is destroyed by the external force, and thus, the gas adsorption device 1 is open. The seal opening member for the gas adsorption device 1 may be included in the vacuum heat insulating body 8.

### Modification Example 9

The inner bag 15 that wraps up the gas adsorption device 1 is provided in the vacuum heat insulating body 8 according to Embodiment 3, but the inner bag 15 does not have to be provided. In this case, since the gas adsorption device 1 is contained inside the core member 9, the movement of the gas adsorption device 1 is restricted by the friction between the gas adsorption device 1 and the inner surface of the storage space 12. With this, the inner surface of the space in which the gas adsorption device 1 is contained serves as the movement suppressing portion. Moreover, the core member 9 is surely sandwiched between the gas adsorption device 1 and the outer coat member 10. With this, when the seal opening member or the like is pressed against the sealing member 2, the core member 9 existing between the sealing member 2 and the outer coat member 10 and having the elasticity absorbs the impact of the external force. Therefore, although the sealing member 2 is destroyed by the external force, broken pieces of the sealing member 2 are prevented from scattering. Therefore, the broken pieces of the sealing member 2 do not get into the core member 9 except for the portion between the sealing member 2 and the outer coat member 10. As a result, when discarding the vacuum heat insulating body 8, the vacuum heat insulating body 8 can be easily separated into respective members. Thus, the recyclability improves. Depending on how the sealing member 2 is destroyed, the core member 9 existing between the sealing member 2 and the outer coat member 10 may contain the broken pieces of the sealing member 2. In this case, by removing the core member 9 existing between the sealing member 2 and the outer coat member 10 from the other core member 9, the vacuum heat insulating body 8 can be separated. Moreover, the core member 9 existing between the sealing member 2 and the outer coat member 10 and the other core member 9 may be separated from each other in advance. In this case, the vacuum heat insulating body 8 can be more easily separated.

### Modification Example 10

In the vacuum heat insulating body 8 according to Embodiment 3, the gas adsorption device 1 is contained inside the core member 9. However, the gas adsorption device 1 may be arranged on the surface of the core member 9.

### Industrial Applicability

The sealed container, method of manufacturing the sealed container, and vacuum heat insulating body according to the present invention are applicable to, for example, a sealed container configured to suppress a decrease in a degree of vacuum of an internal space in which a solid matter is contained, a method of manufacturing the sealed container, and a vacuum heat insulating body.

### Reference Signs List

- 1: sealed container
- 2: sealing member
- 3: metal container
- 4: solid matter
- 5: opening portion
- 6: joint portion
- 7: narrow portion
- 8: vacuum heat insulating body
- 9: core member
- 10: outer coat member
- 11: cut
- 12: tear
- 12: space
- 13: mark
- 14: through hole
- 15: inner bag
- 16: water adsorbent

## Claims

1. A sealed container comprising:
a metal container including an opening portion and a first internal space that is reduced in pressure;
a solid matter contained in the first internal space of the metal container; and
a sealing member made of glass containing at least alkali earth metal oxide or alkali metal oxide, wherein
the sealing member is melted by heating and then solidified by cooling to be joined to and seal the opening portion of the metal container.

2. The sealed container according to claim 1, wherein the alkali earth metal oxide of the sealing member is BaO or SrO.

3. The sealed container according to claim 1 or 2, wherein:
the sealing member is located inside the opening portion and joined to the opening portion; and
the metal container has a higher thermal expansion coefficient than the sealing member.

4. The sealed container according to any one of claims 1 to 3, wherein the metal container is made of aluminum.

5. The sealed container according to any one of claims 1 to 4, wherein:
a narrow portion is formed at the opening portion of the metal container; and
the sealing member is joined to and seal the narrow portion.

6. The sealed container according to any one of claims 1 to 5, wherein:
the solid matter contains a gas adsorbing material that does not deteriorate by a heat treatment; and
the sealed container serves as a gas adsorption device.

7. A vacuum heat insulating body comprising:
the gas adsorption device constituted by the sealed container according to claim 6;
a core member; and
a hollow outer coat member including a second internal space in which the gas adsorption device and the core member are contained and which is reduced in pressure and sealed.

8. The vacuum heat insulating body according to claim 7, wherein a through hole through which the gas adsorption device is open is formed by destroying the sealing member in the second internal space of the outer coat member.

9. The vacuum heat insulating body according to claim 8, wherein:
the opening portion of the metal container is formed in a tubular shape having a substantially flat cross section; and
the through hole is formed by applying an external force, acting in a direction along a short axis of the substantially flat cross section of the opening portion, to the sealing member to destroy the sealing member.

10. The vacuum heat insulating body according to any one of claims 7 to 9, wherein:
the gas adsorption device is contained in the core member; and
the core member is interposed between the outer coat member and the gas adsorption device.

11. The vacuum heat insulating body according to claim 10, further comprising a cut formed on the core member and communicating with a space in which the gas adsorption device is contained in the core member.

12. The vacuum heat insulating body according to any one of claims 7 to 11, further comprising a mark put on a portion of the outer coat member, the portion corresponding to a portion where the gas adsorption device is provided.

13. The vacuum heat insulating body according to any one of claims 7 to 12, further comprising a movement suppressing portion provided in the second internal space of the outer coat member and configured to suppress a movement of the gas adsorption device.

14. The vacuum heat insulating body according to claim 13, wherein the movement suppressing portion is constituted by an inner bag configured to contain a part of the gas adsorption device or the entire gas adsorption device.

15. The vacuum heat insulating body according to claim 14, wherein the inner bag is made of an elastic material.

16. The vacuum heat insulating body according to claim 15, wherein the elastic material includes nonwoven fabric made of resin.

17. The vacuum heat insulating body according to claim 16, wherein the resin forming the nonwoven fabric contains at least PP or PET.

18. The vacuum heat insulating body according to any one of claims 13 to 17, wherein the movement suppressing portion is constituted by an inner surface of the space in which the gas adsorption device is contained in the core member.

19. A method of manufacturing a sealed container, comprising:
containing a solid matter in a first internal space of a metal container; and
sealing an opening portion of the metal container by a sealing member, made of glass containing at least alkali earth metal oxide or alkali metal oxide, in such a manner that while reducing pressure of the first internal space of the metal container, the sealing member is melted by heating and solidified by cooling to be joined to the opening portion of the metal container.
